# EUROPÄISCHE PATENTSCHRIFT

(11) **EP 1 862 624 B1**
(45) Veröffentlichungstag und Bekanntmachung des Hinweises auf die Patenterteilung: **15.02.2017**
(21) Anmeldenummer: 07405118.6
(22) Anmeldetag: 12.04.2007
(51) Int. Cl.: E05C 19/06, E05C 19/16, H01F 7/18, E05B 47/00

(54) **Zuhalteeinrichtung für eine Zugangsschutzvorrichtung**
Closing device for an access protection device
Dispositif de maintien pour un dispositif de protection de l'accès

(30) Priorität: 01.06.2006 CH 8812006
(43) Veröffentlichungstag der Anmeldung: 05.12.2007
(73) Patentinhaber: Pilz Auslandsbeteiligungen GmbH, 73760 Ostfildern (DE)
(72) Erfinder: Schmid, Max, 7323 Wangs (CH)
(74) Vertreter: Hasler, Erich

(56) Entgegenhaltungen:
- EP-A1- 0 018 352
- EP-A2- 0 715 179
- EP-A2- 1 276 120
- EP-A2- 1 510 639
- WO-A1-98/24106
- GB-A- 2 368 210

## Beschreibung

Die Erfindung betrifft eine Vorrichtung und ein Verfahren zum Schutze vor einem gefährlichen Eindringen in einen Gefahrenraum.

Gefahrenräume, z.B. ein abschliessbarer Raum einer Fabrikationsanlage mit einer im Betrieb für den Menschen gefährlichen Maschine in diesem Raum, müssen zugänglich und unzugänglich gemacht werden können. Der Zugang zu einem solchen Gefahrenraum erfolgt in aller Regel durch eine Türe, oder ein anderes den Zugangsweg versperrendes oder freigebendes Teil. Für die Überwachung des Zustands einer solchen den Zugangsweg versperrenden oder freigebenden Türe sind verschiedene Zuhalteeinrichtungen vorgeschlagen worden. Eine Zuhalteeinrichtung kann die Türe selber zuhalten und überwachen, oder aber einen die Türe verriegelnden Riegel zuhalten und überwachen.

Die Erfindung betrifft insbesondere eine solche Zuhalteeinrichtung für eine Zugangsschutzvorrichtung, die sowohl eine Zuhaltekraft auf das den Zugangsweg versperrende und freigebende Teil, also z.B. eine Türe oder einen Riegel, ausübt, als auch den Zustand dieses Teils überwacht.

Aus der DE 103 39 363 ist eine Zugangsschutzeinrichtung für einen Raumbereich bekannt. Diese Einrichtung ist gesteuert ein- und abschaltbar. Sie umfasst einen feststehenden Teil und einen beweglichen Teil. Mit dem beweglichen Teil kann eine Zugangsöffnung im feststehenden Teil verschlossen werden. Für den beweglichen Teil ist eine Zuhaltung vorgesehen. Am feststehenden Teil ist ein Elektromagnet vorgesehen, am beweglichen Teil ist ein Anker vorgesehen, mit dem der Elektromagnet verschliessbar ist. Die Zuhaltekraft des Elektromagneten ist über eine Stromregelung regelbar.

Die WO98/24106 lehrt eine Steuerungsschaltung für ein Solenoid sowie ein Verfahren zur Bestimmung des Betriebszustands des Solenoids. Im Verfahren werden Stromimpulse erzeugt und die innerhalb des Solenoidtreibers errechneten Abklingzeiten werden mit Referenzwerten verglichen, wobei durch den Vergleich der offene oder geschlossene Zustand des Solenoids bestimmt werden kann. Das Solenoid und die Strommesseinrichtung sind beide Teile derselben zwei Kreisläufe. Wird der Stromfluss im einen Kreislauf unterbrochen, kann weiterhin ein Strom im zweiten Kreislauf fliessen und von der Messeinrichtung erfasst werden.

Um für die Überwachung des Elektromagneten, bzw. der Position des Ankers relativ zum Elektromagneten, keinen separaten Sensor zu benötigen, wird ein Regelsprung von einem ersten vorgegebenen zu einem zweiten vorgegebenen Sollwert der Stromregelung vorgenommen. Dabei wird die Zeit vom Beginn des Regelsprungs bis zum Erreichen des zweiten Sollwerts gemessen. Ist dieser Zeitraum grösser, ist der Anker weiter entfernt, ist er aber kleiner, so ist der Anker näher am Elektromagneten.

Bei der Einrichtung wird ein Spannungsabfall über einen Shunt in der Versorgungsleitung gemessen. Die Spannung an diesem Shunt stellt ein Mass für den durch die Magnetspule fliessenden Strom dar. Diese Spannung wird über einen A/D-Wandler dargestellt.

Aufgrund der oben angeführten Regel muss geschlossen werden, dass die Sollwerte innerhalb eines Sättigungsbereichs des Magneten liegen.

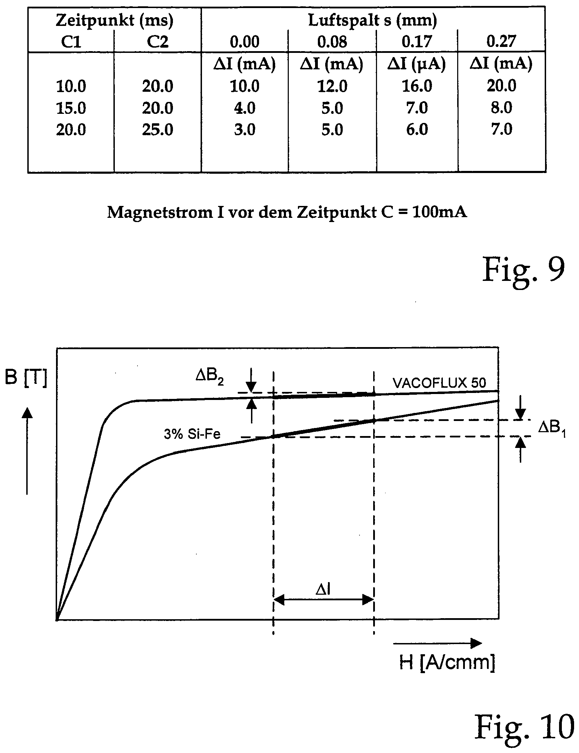

Würde der Elektromagnet im nicht gesättigten Bereich überwacht, käme die entsprechend umgekehrte Regel zur Anwendung. Es besteht jedoch bei der vorgeschlagenen Vorrichtung keine Kontrolle, ob der Magnet tatsächlich in oder ausserhalb der Sättigung betrieben ist. Daher ist das gemessene Signal nicht eindeutig. Der festgestellte Stromanstieg kann nämlich auch dann auftreten, wenn ein Luftspalt vorhanden ist (vergleiche Fig. 10).

Die Aufgabe der Erfindung besteht darin, eine Zuhalteeinrichtung, bzw. eine Zugangsschutzvorrichtung für einen Gefahrenraum mit einer solchen Zuhalteeinrichtung zu schaffen.

Diese Aufgabe wird bei einer Vorrichtung gemäss Oberbegriff des unabhängigen Vorrichtungsanspruchs erfindungsgemäss durch die Merkmale des Kennzeichens des unabhängigen Vorrichtungsanspruchs gelöst.

Eine solche Zuhalteeinrichtung dient dem Zuhalten und Freilassen, sowie Überwachen eines Zustandes eines einen Zugang zu einem Gefahrenraum versperrenden oder freigebenden Teils. Eine Zugangsschutzeinrichtung mit einer solchen Zuhalteeinrichtung dient dem Schutz vor einem Betreten des Gefahrenraumes zu einen gefährlichen Zeitpunkt.

Die Zuhalteeinrichtung umfasst einen Elektromagneten und ein Anker zum Schliessen des Magnetkreises des Elektromagneten. Dabei sind Anker und Elektromagnet am Zugang und an dem den Zugang versperrenden oder freigebenden Teil anzuordnen oder angeordnet. Diese Anordnung muss so sein, dass in einer den Zugang verschliessenden Position dieses Teils der Magnetkreis durch den Anker geschlossen, in einer den Zugang freigebender Position der Magnetkreis jedoch offen ist. Weiter umfasst die Zuhalteeinrichtung einen Versorgungskreislauf, in welchem ein Schalter zum Verbinden einer Stromquelle mit der Magnetspule und Trennen der Stromquelle von der Magnetspule und ein Messwiderstand vorhanden sind. Weiter umfasst sie eine Auswertevorrichtung zum Messen des Spannungsabfalls über den Messwiderstand sowie zum Auswerten dieser Strommessung.

Die Zuhalteeinrichtung zeichnet sich erfindungsgemäss dadurch aus, dass der Messwiderstand sowohl im Versorgungskreislauf als auch im Magnetspulenkreislauf angeordnet ist.

Seine Anordnung im Versorgungskreislauf erlaubt eine Überwachung des Stromverhaltens während der Versorgung des Elektromagneten mit Strom aus der Stromversorgung, also beim Einschalten und nach dem Einschalten.

Seine Anordnung im Magnetspulenkreislauf erlaubt eine Überwachung des Stromverhaltens beim Abschalten der Stromversorgung und während dem die Stromversorgung ausgeschaltet ist. Sie erlaubt ferner die Erkennung des Stromanstiegs im Magnetspulenkreislauf infolge eines Abhebens des Ankers vom Kern.

Zweckmässigerweise steht die Auswertevorrichtung in Verbindung mit einer Bedien- und Anzeigevorrichtung und einer übergeordneten Steuerung für den Gefahrenraum und ist zum Senden von Informationen an die Bedien- und Anzeigevorrichtung und zum Empfangen von Informationen von der Bedien- und Anzeigevorrichtung ausgebildet. Wenn im Gefahrenraum keine Gefahr besteht, also beispielsweise die darin angeordnete Maschine still steht, ist die übergeordnete Steuerung so gestellt, dass der Zugang frei gegeben werden kann und die Bedien- und Anzeigevorrichtung zeigt dies an. Nun regelt die Auswertevorrichtung den Schalter derart, dass der Anker ohne besondere Kraftanstrengung vom Kern abgehoben werden kann. Ist es jedoch gefährlich, den Gefahrenraum zu betreten, so ist die übergeordnete Steuerung so gestellt, dass die Auswertevorrichtung die Schaltung derart regelt, dass der Anker lediglich mit besonderer Kraftanstrengung vom Kern gelöst werden kann, und die Bedien- und Anzeigevorrichtung zeigt dies an. Dabei wird dieser den Magnetkreis schliessenden Zustand des Ankeres überprüft. Sollte dieser Zustand aus irgend einem Grund nicht als geschlossen erkannt werden, so wird über die Auswertevorrichtung und die übergeordnete Steuerung eine Gefährdung einer in den Gefahrenraum eindringenden Person z.B. durch Ausschalten oder Stoppen der darin vorhandenen Maschine gebannt und durch die Bedien- und Anzeigevorrichtung angezeigt. Mit der Bedien- und Anzeigevorrichtung kann auch Einfluss genommen werden auf die übergeordnete Steuerung, um die gefährlichen Vorgänge im Gefahrenraum zu stoppen und den Gefahrenraum freizugeben oder den Gefahrenraum zu verschliessen und die gefährlichen Vorgänge zu starten.

Zur Überwachung des Zustands der Zuhalteeinrichtung ist die Auswertevorrichtung vorteilhaft zum Ansteuern des Schalters in Abhängigkeit von einer Zeitmessung, oder in Abhängigkeit von einem Wert oder einer Wertdifferenz der Strommessung ausgebildet. Dies erlaubt die Stromversorgung mit dem Schalter kurzfristig zu unterbrechen und so einen für den gegenwärtigen Zustand charakteristischen Stromverlauf im Magnetspulenkreislauf zu generieren und von einem für einen anderen Zustand charakteristischen Stromverlauf zu unterscheiden. Es kann dabei der Stromabfall und/ oder der Stromanstieg anhand der Veränderung des Spannungsabfalls über den Messwiderstand gemessen werden.

Zweckmässigerweise ist die Auswertevorrichtung derart ausgebildet, dass mit ihr der zeitliche Verlauf des Stromanstiegs im Magnetspulenkreislauf beim Einschalten des Elektromagneten gemessen werden kann. Von besonderem Interesse ist der zeitliche Verlauf innerhalb des ungesättigten Betriebsbereich des Elektromagneten, da in diesem Bereich gemessene Werte eindeutig dem Zustand der Zuhalteeinrichtung zugeordnet werden können. Wesentlich dabei ist, dass anhand dieser Messwerte darauf geschlossen werden kann, ob der Magnetkreis geschlossen ist oder nicht. Ist der Magnetkreis geschlossen, steigt der Strom im Spulenkreislauf bis zu einem Grenzwert des Spulenstromes zwischen gesättigtem und ungesättigtem Zustand des Magneten flacher an als bei geöffnetem Magnetkreis. Es kann bei der Überwachung dieses Anstiegs der Grenzwert erkannt werden und aufgrund dieses Grenzwerts jeder Messwert dem gesättigten oder ungesättigten Betrieb zugeordnet werden.

Weiter ist von Vorteil, wenn die Auswertevorrichtung derart ausgebildet ist, dass eine Stromveränderung während des Betriebs des Elektromagneten messbar ist. Von besonderem Interesse ist dabei die Überwachung, ob der Strom im Magnetspulenkreislauf über das normale Niveau des Betriebsstroms hinaus ansteigt. Tut er das, so kann auf Grund dieses induzierten Stroms auf eine Veränderung der Lage des Ankers zum Kern geschlossen werden. Wird der geschlossene Zustand vorausgesetzt, kann ein solcher Strom lediglich durch Anheben des Ankers induziert werden. Diese Auswertung muss zweckmässigerweise durch entsprechende Steuerung der Auswertevorrichtung und übergeordneter Steuerung zum Beenden der die Gefahr im Gefahrenraum generierenden Vorgänge führen.

Die Auswertevorrichtung ist ferner vorteilhaft derart ausgelegt, dass beim Unterbrechen des Versorgungskreislaufs der zeitliche Verlauf des Stromabfalls im Magnetspulenkreislauf gemessen wird, und dass die Stromversorgung nach einem Erreichen eines Messwerts (zeitlich oder Strom im Magnetspulenkreislauf) mit dem Schalter wieder zugeschaltet wird. Dank der Überwachung des Stromabfalls und dem Feststellen eines unterhalb oder oberhalb des Grenzwerts liegenden Stroms in der Spule, kann die Spule von diesem Wert abhängig wieder unter Spannung gesetzt werden und der Stromanstieg im ungesättigten oder gesättigten Betriebsbereich des Magneten eruiert werden.

Vorteilhaft wird jedoch lediglich die Neigung des Stromabfalls eruiert. Es kann dazu die Stromversorgung beispielsweise für eine fixe Zeitspanne unterbrochen werden. Es kann auch die Zeit gemessen werden, die verstreicht, bis der Strom nach einem Stromunterbruch im Spulenkreislauf auf einen vorgegebenen Wert abgefallen ist. Liegt die ermittelte Neigung innerhalb eines Toleranzbereichs, so liegt der Betrieb des Magneten im gesättigten Bereich. Ist der Stromabfall zu steil, so ist der Magnetkreis nicht geschlossen.

Um möglichst kurze Unterbrechungszeiten zu erreichen, kann der Kern des Elektromagneten aus Trafoblech geschichtet sein.

Weiter kann auch auf der Ankerseite des Elektromagneten eine Bedienung und/ oder eine Anzeige vorgesehen sein. Diese kann ohne eigene Stromversorgung betrieben werden, indem sie durch Induktion mit Strom versorgt wird. Es ist dafür zweckmässigerweise eine Spule um den Anker und eine mit dieser Ankerspule verbundene Bedienelektronik zur Eingabe von Signalen in den Magnetkreis und damit in den Magnetspulenkreislauf vorhanden. Solche Signale können von der Auswertvorrichtung erkannt und entsprechend umgesetzt werden. Für eine Anzeige von Zustandsveränderungen oder des Zustands des Magnetkreises muss eine mit der Ankerspule verbundene Anzeigeelektronik vorhanden sein. Die dafür benötigte Energie wird durch eine in regelmässigen Abständen generierte Stromschwankung im Magnetspulenkreislauf, und durch die dadurch erreichten Schwankungen im Magnetfeld des Elektromagneten, in der Ankerspule induziert. Diese Stromschwankungen entstehen durch Abschalten und Zuschalten der Stromversorgung. In diesen Versorgungspausen wird der Zustand der Zuhalteeinrichtung überprüft.

Um eine Manipulation der Zuhalteeinrichtung zu verhindern, durch welche ohne Anker ein geschlossener Magnetkreis erreicht wird, sind Anker und Kern mit gegenseitig entsprechenden Passformen ausgebildet. Diese Passformen müssen von einer Ebene abweichend gestaltet sein. Bevorzugt werden beispielsweise drei Erhöhungen im Kern, auf welche drei Vertiefungen im Anker passen. Dadurch kann ein den Magnetkreis schliessendes Metallteil lediglich im Abstand der Höhe der Erhöhungen auf dem Kern angeordnet werden, was von der Auswertevorrichtung als nicht geschlossen erkannt würde.

Es geht bei der Erfindung somit auch um die Überwachung des Zustands eines einen Zugang zu einem Gefahrenraum versperrenden oder freigebenden Teils mit einer solchen Zuhalteeinrichtung. Dabei wird in bekannter Art eine Veränderung des Spannungsabfalls über den Messwiderstand bei einer Veränderung eines Versorgungsparameters gemessen und interpretiert. Dank der erfindungsgemässen Anordnung des Messwiderstand innerhalb des Magnetspulenkreislaufs ist es nun möglich geworden, den zeitlichen Verlauf der lediglich innerhalb des Magnetspulenkreislaufs überwachbaren Stromstärke zu überwachen. Diese Überwachung hat den Vorteil, dass der Zustand der Zuhalteeinrichtung auch bei kurzfristig abgeschalteter Stromversorgung erkannt wird. Dies wiederum erlaubt zu überwachen, ob der Magnet sich innerhalb oder ausserhalb des gesättigten Betriebsbereichs befindet, so dass die Messresultate dem Zustand der Zuhalteeinrichtung eindeutig zugeordnet werden können.

Um eindeutige Resultate zu erhalten wird vorzugsweise der beim Verbinden der Magnetspule mit dem Versorgungskreislauf auftretende zeitliche Verlauf des Stromanstiegs im Magnetspulenkreislauf innerhalb des ungesättigten Betriebsbereichs überwacht. Es kann, falls gewünscht, aufgrund der Veränderung der gemessenen Neigungen des Stromanstiegs ein Grenzwert des Magnetspulenstroms bezüglich gesättigtem und ungesättigtem Betriebsbereich des Magneten bestimmt werden. Dieser Grenzwert kann dazu genutzt werden, beim Ausschalten der Stromversorgung zu erkennen, wann der Magnet wieder den ungesättigten Bereich erreicht. Zweckmässigerweise wird der Magnetspulenkreislauf in zeitlichen Abständen von der Stromversorgung getrennt und dabei der Stromabfall im Spulenkreislauf überwacht. Sobald der Magnetspulenstrom unter einen vorbestimmten Wert fällt, der unterhalb oder oberhalb des Grenzwerts liegen kann, kann die Stromversorgung wieder zugeschaltet werden, um den Stromanstieg zu überwachen und anhand der Neigung des Stromanstiegs den Zustand der Zuhalteeinrichtung festzustellen. Vorteilhaft wird zudem während des Betriebs des Elektromagneten der Strom im Magnetspulenkreislauf überwacht. Sollte dabei ein über das normale Betriebsniveau hinausgehender Anstieg festgestellt werden, wird vorteilhaft ein Prozess ausgelöst, der eine angepasste Reaktion auf das festgestellte, gewaltsame Öffnen des den Zugang zum Gefahrenraum versperrenden Teils darstellt.

Im Betrieb der Zuhalteeinrichtung kann daher zuerst erkannt werden, ob der Magnetkreis beim Einschalten der Spannungsquelle geschlossen ist oder nicht. Das zeitliche Verhalten des Stromes im Spulenkreislauf ist ein eindeutiges Mass dafür. Es kann daher innerhalb von einigen Millisekunden nach dem Einschalten der Zuhalteeinrichtung festgestellt werden, ob der Anker den Magnetkreis schliesst.

Daher kann anschliessend davon ausgegangen werden, dass der Magnetkreis geschlossen ist und daher der Anker mit maximaler Magnetkraft am Kern festhält. Unter diesen Voraussetzungen ist lediglich zu überwachen, ob der Anker abgehoben wird, oder ob das Magnet im gesättigten Betriebsbereich betrieben wird. Es kann auch beides überwacht werden.

Zum Überwachen, ob der Anker abgehoben wird, wird mit der Auswertelektronik der Spulenkreislauf darauf überwacht, ob der Spulenstrom ansteigt. Steigt der Spulenstrom an, während dem der Betrieb kontinuierlich sein sollte, so kann der Stromanstieg lediglich aus einer Induktion stammen, die durch das Abheben des Ankers verursacht wurde.

Zum Überprüfen, ob der Magnet im gesättigten Bereich betrieben wird, muss lediglich der Stromabfall gemessen werden, der während einer Unterbrechung der Stromzufuhr im Spulenkreislauf eintritt. Dieser Messwert gibt innerhalb weniger Millisekunden ein eindeutiges Resultat.

Diese beiden Kontrollmessungen können nur dann gemessen werden, wenn der Strom im Spulenkreislauf gemessen werden kann.

Die erfindungsgemässe Vorrichtung funktioniert wie folgt:
Bei geschlossenem Magnetkreis (kleiner Luftspalt S) reagiert die Magnetspule träge auf eine Spannungsänderung. Durch wiederholte oder kontinuierliche Messung des Magnetspulenstromes mittel der Messung des Spannungsabfalls über den Messwiderstand kann dieses träge Verhalten von einem nahezu unverzögerten Verhalten des Stromes bei geöffnetem Magnetkreis klar unterschieden werden. Diese Messung wird zuerst anschliessend an das Einschalten der Stromzufuhr zur Magnetspule durchgeführt, insbesondere solange der Magnet noch nicht im gesättigten Bereich betrieben wird. Aufgrund dieser Messung kann ausgesagt werden, ob der Magnetkreis geschlossen ist. Bei nicht geschlossenem Magnetkreis erfolgt eine Störungsmeldung und die übergeordnete Steuerung verhindert das Starten eines gefährlichen Prozesses im Gefahrenraum. Bei geschlossenem Magnetkreis ist das den Zugang zum Gefahrenraum versperrende Teil mit der vollen Magnetkraft in der versperrenden Stellung gehalten. Die übergeordnete Steuerung gibt daraufhin den Start des gefährlichen Prozesses frei.

Während dem Betreiben des gefährlichen Prozesses im Gefahrenraum muss die Zuhalteeinrichtung überwachen, ob der Zugang versperrt bleibt. Es gibt zwei Möglichkeiten, in den Gefahrenraum zu gelangen. Jedenfalls wird dabei der Anker vom Kern gelöst. Ist der Kern im gesättigte Betriebsbereich, so muss der Anker entgegen der Magnetkraft vom Kern gelöst werden.

Die erste Möglichkeit besteht darin, sich den Zugang zu erzwingen, indem der Anker entgegen der Magnetkraft vom Kern gelöst wird. Da sich beim gewaltsamen Öffnen der den Zugang versperrenden Türe der Anker, z.B. aufgrund einer gefederten Lagerung, plötzlich vom Kern losreisst, wird durch diese Bewegung des Ankers in der Magnetspule ein deutlich messbarer Stromanstieg induziert. Dieser zusätzliche Strom muss die Speisung liefern. Er wird anhand des Spannungsabfalls über den im Spulenkreislauf angeordneten Messwiderstand ermittelt.

Eine zweite Möglichkeit besteht darin, dass aus irgend einem Grunde, die Magnetkraft nicht aufrecht erhalten geblieben ist. In diesem Fall ist das Magnet nicht mehr im gesättigten Bereich betrieben. Es genügt daher festzustellen, ob das Magnet im gesättigten Bereich betrieben wird, oder nicht. Im gesättigten Betriebsbereich ist der zeitliche Verlauf des Stromabfalls nach einem Unterbruch der Stromversorgung innerhalb von bekannten Toleranzbereichen. Es wird daher zur Überwachung des Zustands der Zuhalteeinrichtung die Stromversorgung für kurze Zeit von der Magnetspule getrennt.

Ist der Stromabfall ausserhalb des Toleranzbereichs, so ist die Zuhaltung nicht sicher gewährleistet, die übergeordnete Steuerung stellt daher die gefährlichen Prozesse ab. Ist der Stromabfall innerhalb des Toleranzbereichs und die Stromstärke des Magnetspulenstroms auf dem geforderten Niveau, so arbeitet der Magnet im gesättigten Bereich. Daraus kann geschlossen werden, dass der Anker den Magnetkreis schliesst und daher der Zugang versperrt ist. Der nach der Abschaltung der Stromversorgung gemessene Strom zirkuliert durch die Diode im Magnetspulenkreislauf. Er kann lediglich innerhalb dieses Kreislaufs gemessen werden.

Die Erfindung wird im Folgenden anhand der mit der Zeichnung illustrierten Beispiele näher erläutert. Es zeigt:
- Fig. 1:: schematisch eine Zugangschutzvorrichtung mit einer Zuhalteeinrichtung,
- Fig. 2:: schematisch die Zuhalteeinrichtung,
- Fig. 3:: schematisch eine Zugangsschutzvorrichtung mit einer Zuhalteeinrichtung, ausgerüstet mit einer ankerseitigen Bedienelektronik,
- Fig. 4:: schematisch die Zuhalteeinrichtung mit ankerseitiger Bedienelektronik
- Fig. 5:: diagrammatisch das Verhalten des Stromes im Magnetspulenkreislauf im Verhältnis zur Zeit bei unterschiedlichen Luftspaltweiten, und zwar beim Einschalten und Ausschalten der Stromversorgung, sowie beim Abheben des Ankers vom Kern,
- Fig. 6:: ein Schema des Stromverhaltens und des Spannungsverlaufs im Spulenkreislauf beim Einschalten, Ausschalten und wieder Einschalten des Stromversorgung,
- Fig. 7:: eine diagrammatische Darstellung des Stromanstiegs im Magnetspulenkreislauf über zwei vorgegebene Zeiträume in Abhängigkeit von der Luftspaltweite,
- Fig. 8:: eine diagrammatische Darstellung der Neigung des Stromanstiegs in diesem Zeitraum,
- Fig. 9:: ein Tabelle mit Messwerten des Stroms im Magnetspulenkreislauf bei unterschiedlichen Luftspaltweiten und in Abhängigkeit unterschiedlicher Zeiträume nach dem Ausschalten der Stromversorgung,
- Fig. 10:: eine Gegenüberstellung der Messergebnisse für den Anstieg der Flussdichte B im Verhältnis zum Anstieg der Magnetfeldstärke H im gesättigten Bereich des Magneten bei unterschiedlichen Kernmaterialien.

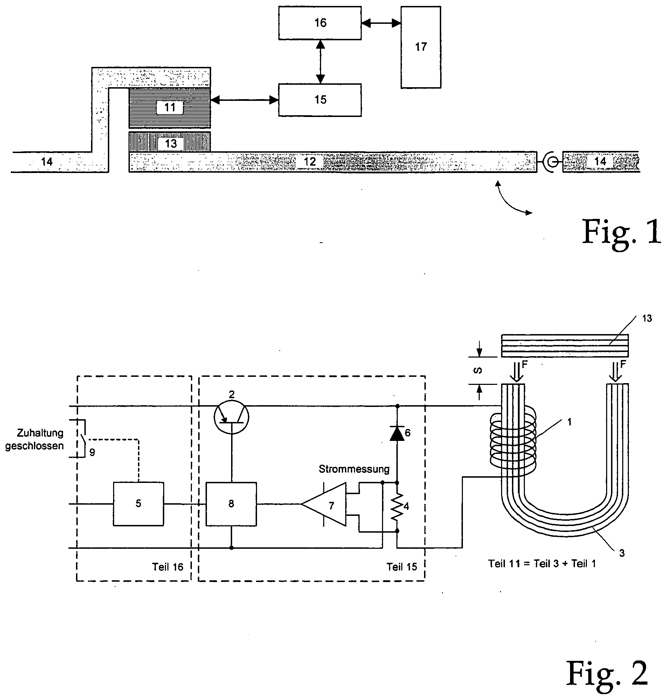

Bei der in Figur 1 dargestellten Zugangsschutzvorrichtung ist eine Wand zwischen einem Aufenthaltsbereich und einem Gefahrenraum mit 14 bezeichnet. Eine Zugangsöffnung in der Wand 14 ist mit einer Türe 12 verschlossen. An der Wand ist ein Magnet 11 angeordnet. An der Türe ist ein Anker 13 angeordnet. Magnet 11 und Anker 13 passen aufeinander, so dass der Anker den Magnetkreis des Elektromagneten 11 dann schliesst, wenn die Türe 12 die Zugangsöffnung in der Wand 14 verschliesst. Die Türe ist aber auch um ihre Angeln verschwenkbar, so dass sie den Zugang zum Gefahrenraum freigeben kann. Bei Öffnen der Türe wird der Anker zwingend vom Kern des Elektromagneten abgehoben. Somit ist der Magnetkreis dann geöffnet. An den Elektromagneten 11 ist eine Betriebselektronik 15 für den Magneten angeschlossen. Diese Betriebselektronik 15 steht in Verbindung mit einer Bedien- und Anzeigeelektronik 16, die wiederum in Verbindung mit einer übergeordneten Steuerung 17 steht.

In Figur 2 ist der Elektromagnet 11 mit Kern 3, Spule 1 und Anker 13, sowie der Betriebselektronik 15 dargestellt. Die Betriebselektronik 15 besteht aus einer Ergänzung des Magnetspulenkreislaufs durch eine Diode 6 und einen Messwiderstand 4, Versorgungsleitungen für die Stromversorgung der Magnetspule 1, einer Messelektronik 7 zum Messen des Stromes im Spulenkreislauf aufgrund des Spannungsabfalls über den Messwiderstand 4. Ferner umfasst die Betriebselektronik einen Mikrokontroller 8 und einen Transistor 2.

Die mit der Betriebselektronik 15 verbundene Bedien- und Anzeigeelektronik 16. Zur Anzeige des Zustands der Zuhalteeinrichtung 11,13, d.h. zur Anzeige, ob kein oder ein grosser Luftspalt S zwischen Anker 13 und Kern 3 vorhanden ist, wird durch die Bedien- und Anzeigeelektronik ein Kontakt geschlossen, wenn der Luftspalt vernachlässigt werden kann und die Magnetkraft F auf den Anker gross ist, bzw. geöffnet, wenn der Luftspalt s gross ist. An diesen Kontakt kann eine Signalleuchte angeschlossen sein.

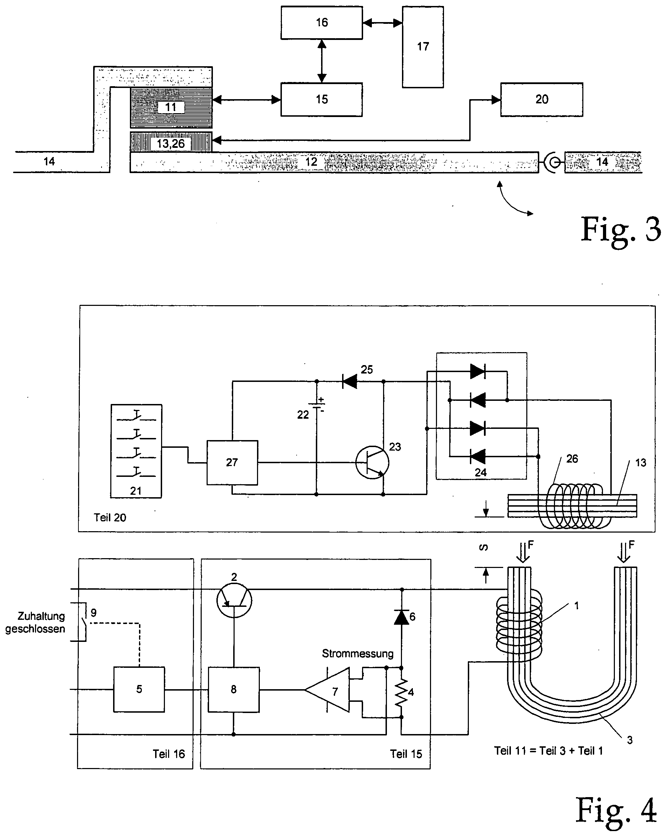

In Figuren 3 und 4 ist die Zuhalteeinrichtung erweitert um eine Bedien- und Anzeigeelektronik 20 auf der Ankerseite des Elektromagneten. Der Anker 13 ist mit einer Ankerspule 26 versehen. An die Ankerspule ist eine elektronische Schaltung angeschlossen, die sowohl in der Ankerspule 26 induzierte Signale erkennen als auch Signale auf die Ankerspule 26 geben kann, die dann von der Betriebselektronik 15 erfasst und ausgewertet werden können.

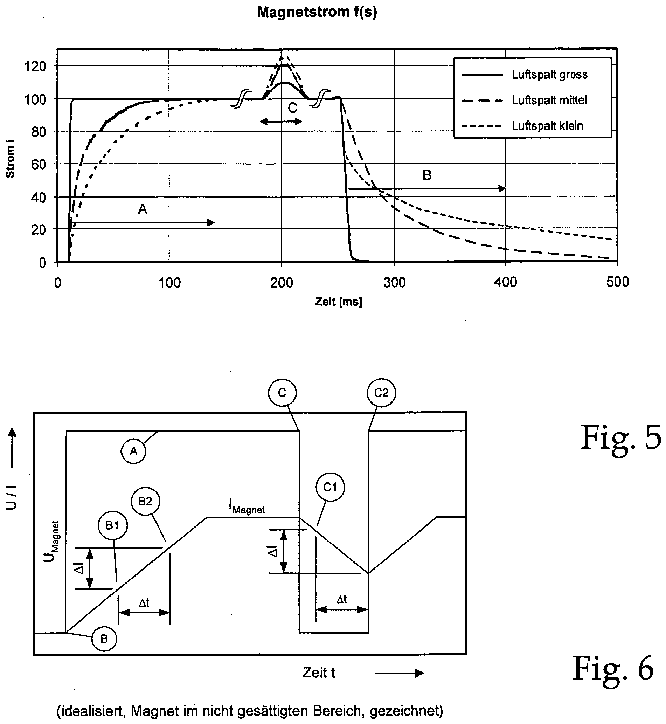

In Figur 5 ist das zeitliche Verhalten des Stromes in der Magnetspule 1 abhhängig von der Luftspaltweite S zwischen Kern 3 und Anker 13 dargestellt. Im Bereich A, das ist im Beispiel während den ersten ca. 150 Millisekunden, ist das Verhalten nach dem Einschalten der Stromversorgung zum Zeitpunkt 0 dargestellt. Bei einem kleinem Luftspalt steigt der Strom langsamer an als bei einem grossen Luftspalt. Die Kurve nähert sich dann einem Maximum, hier 100 mA. Dieses Maximum wird umso rascher erreicht, je grösser der Luftspalt ist.
Im Bereich B ist das Stromverhalten dargestellt beim Abschalten der Versorgung. Die Kurven fallen im gesättigten Bereich des Magneten rasch ab. Ist der Magnetkreis offen, so fällt der Strom sofort ab. Ist der Magnetkreis geschlossen, so nimmt der Strom träge ab.

Im Bereich C ist ein Stromanstieg dargestellt, der Auftritt, wenn der Anker gegen die Magnetkraft F vom Kern gelöst wird. Dieses Entfernen des Ankers vom Magnetkreis lässt den Spulenstrom ansteigen. Je geschlossener der Magnetkreis in der Ausgangslage war desto grosser wird der induzierte Stromanstieg.

Das in Figur 6 dargestellte Schema zeigt in einer überlappten Darstellung einerseits die Spannung U, die auf den Magnetspulenkreislauf gegeben wird als Rechteck-Wellenlinie, die im Magneten ausgelösten Ströme als ansteigende und absteigende Rampen auf der Zeitachse. Es ist eine idealisierte Darstellung innerhalb des nicht gesättigten Betriebsbereichs des Magneten. Beim Zeitpunkt B wird die Spannung U_{Magnet} zugeschaltet. Diese Spannung steigt unmittelbar auf ihren Maximalwert an und löst dadurch ein Ansteigen des Stromes in der Magnetspule aus. Dieser steigt an bis auf einen Höchstwert, der hier mit I Magnet bezeichnet ist. Im Zeitpunkt C wird die Stromversorgung ausgeschaltet. Die Spannung fällt sofort zusammen auf 0. Der Strom fällt ab bis zu dem Zeitpunkt C2, an welchem die Versorgung wieder zugeschaltet wird und der Strom daher wieder ansteigt.

Die Neigung der Stromverlaufs zwischen den Messzeitpunkten B1 und B2, sowie C1 und C2 kann mit ΔI durch Δt angegeben werden.

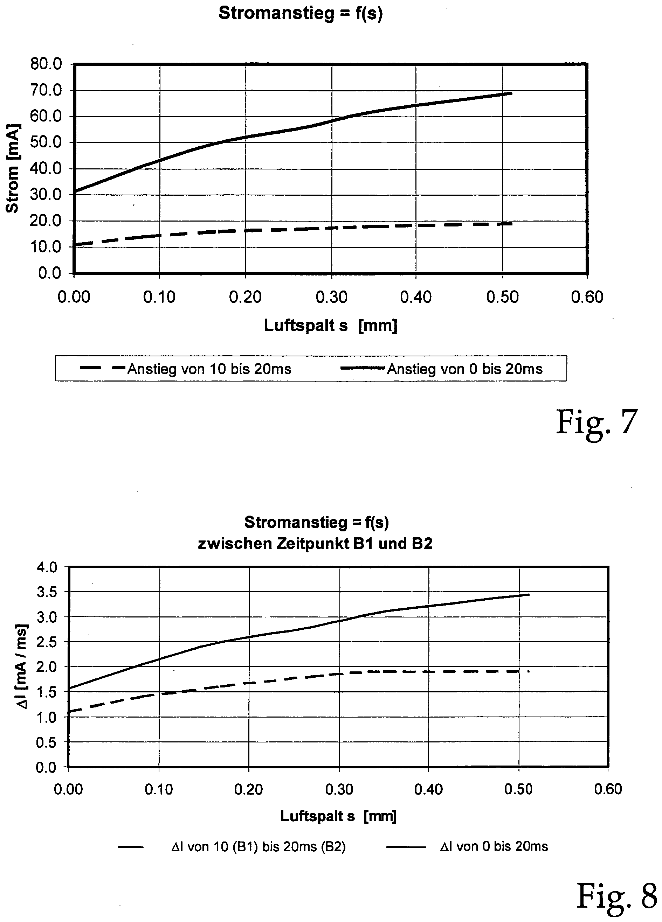

Dieser Anstieg im Bereich B1 bis B2 ist abhängig von der Luftspaltweite S zwischen Anker und Kern. In der Figur 7 ist dieser Stromanstieg in Abhängigkeit von der Luftspaltweite S abgetragen, der innerhalb der ersten 20 Millisekunden (ausgezogene Linie), bzw. innerhalb eines Zeitfensters von 10 bis 20 Millisekunden (unterbrochene Linie) nach dem Zuschalten der Stromversorgung geschieht. Die Grafik zeigt, dass der Anstieg ein Mass für die Spaltweite darstellt. Der Anstieg ist umso steiler, je weiter der Luftspalt ist.

In Figur 8 ist die Neigung des Anstiegs dargestellt. Die x Achse enthält wie bei Figur 7 die Luftspaltweite in mm. Die y-Achse aber im Unterschied zu Figur 7, die Verhältniszahl Stromanstieg pro Millisekunde. Diese Darstellung zeigt, dass die durchschnittliche Neigung im Bereich von 10 bis 20 Millisekunden flacher ist (unterbrochene Linie) als im Bereich 0 bis 20 ms (ausgezogene Linie).

In der Tabelle gemäss Fig. 9 ist der Stromabfall zwischen den Zeitpunkten C1 und C2 dargestellt. Es wird von einem Strom von 100 mA zum Zeitpunkt C (Fig. 6) ausgegangen. Der Stromabfall ist im nicht gesättigten Bereich des Magneten der Tabelle gemäss grösser, je weiter der Luftspalt ist. Er ist umso geringer, je später nach dem Abschalten der Spannungsquelle der Stromabfall gemessen wird.

In Figur 10 ist dargestellt, dass die Zunahme des Magnetflusses im gesättigten Bereich sehr flach und sehr stark materialabhängig ist. Eine Stromänderung von ΔI zeitigt bei dem Material "Vacoflux 50" (Handelsname) im Vergleich zu Weicheisen eine deutliche Abweichung in der Zunahme der Flussdichte B.

Ist der Luftspalt jedoch in einem bestimmten Mass offen (flache untere Kurve), so tritt eine sehr ähnliche Steigung der Kurve ein. Der Stromanstieg allein kann daher nicht eindeutig interpretiert werden. Der Stromanstieg ist daher innerhalb des ungesättigten Bereichs bei einem gewissen Luftspalt identisch mit dem Stromanstieg bei geschlossenem Magnetkreis im gesättigten Bereich.

Im ungesättigten Betriebsbereich (nahe der y-Achse) ist anhand des Spulenverhaltens jedoch sehr deutlich unterscheidbar, ob der Luftspalt gross oder klein ist.

Die Vorrichtung gemäss Figuren 3 und 4 wird daher z.B. folgendermassen betrieben. Die Türe 12 ist geschlossen. Im Gefahrenraum soll der gefährliche Prozess gestartet werden. Der Mikroprozessor (Auswertungselektronik) 8 der Betriebselektronik 15 erhielt zuletzt von der übergeordneten Steuerung 17 die Information, dass der Gefahrenraum zugänglich sein soll. Die Auswertungselektronik 8 schaltet mit dem Transistor 2 in regelmässigen Abständen für einige Millisekunden die Stromzufuhr zum Magnetspulenkreislauf ein. Die Stromänderung bewirkt eine Magnetfeldänderung, die eine Stromänderung im Spulenkreislauf der Ankerspule 26 bewirkt. Mit dieser Stromänderung wird die Bedien- und Anzeigeelektronik 20 auf der Ankerseite gespeist. Diese zeigt den Betriebszustand an: Es leuchtet z.B. eine grüne Leuchtdiode, die anzeigt, dass der Zugang zum Gefahrenraum freigegeben ist.

Mit beispielsweise der ankerseitigen Bedien- und Anzeigeelektronik gibt der verantwortliche Arbeiter einen Impuls (Start) über die Ankerspule 26 in den Magnetkreis und schliesslich in den Kreislauf der Magnetspule 1. Die Auswertungselektronik 8 erkennt den Befehl als Aufforderung zum Versperren der Türe 12 und Starten des gefährlichen Prozesses im Gefahrenraum. Die Auswerteelektronik steuert darauf den Transistor 2 derart an, dass die Stromversorgung mit dem Spulenkreislauf verbunden wird. Die Auswerteelektronik überwacht dabei den Stromanstieg in der Magnetspule 1. Entspricht der Stromanstieg dem beinahe unverzögerten Stromanstieg der Spule bei offenem Magnetkreis, gibt die Auswertungselektronik ein Signal auf die Anzeigevorrichtung, das anzeigt, dass die Türe richtig zu schliessen ist.

Entspricht der gemessene Stromanstieg aber dem trägen Anstieg bei geschlossenem Magnetkreis, so wird sofort der gesättigte Bereich des Magnets und damit die maximale Magnetkraft erreicht. Die Türe ist daher geschlossen und zugehalten. Die Auswertungselektronik 8 zeigt diesen Zustand mit der Anzeigevorrichtung an. Es blinkt beispielsweise eine rote Leuchtdiode. Die Aufforderung zum Starten wird nun an die übergeordnete Steuerung weitergegeben. Diese startet nun den gefährlichen Prozess. Mit dem Start wird auch ein Impuls an den Mikroprozessor 8 gegeben, der die Anzeige entsprechend ändert. Die rote Leuchtdiode leuchtet z.B. permanent.

Während dem der gefährliche Prozess im Gang ist, überwacht die Auswertungselektronik, ob der Magnet die Türe zuhält. Angenommen ein Arbeiter verschafft sich unter Kraftaufwendung Zugang, so reisst er dabei den Anker 13 vom Magnetkern 3. Über den überwachten Spannungsabfall über den Messwiderstand 4 nimmt die Betriebselektronik 15 den durch das Wegreissen des Ankers in dem Spulenkreislauf induzierten Stromanstieg war. Der Mikroprozessor löst unmittelbar einen Stop der gefährlichen Vorgänge im Gefahrenraum aus. Um dies zu erreichen wird die übergeordnete Steuerung 17 beauftragt, den Prozess zu stoppen. Gleichzeitig löst der Mikroprozessor einen Alarm aus.

Wird dieser Stromanstieg in einer alternativen Ausführung nicht überwacht, so wird alternativ der Betriebszustand des Magneten überwacht. Dieser muss, solange die Zuhaltung aktiviert ist, im gesättigten Bereich sein. Um dies zu kontrollieren steuert der Mikroprozessor 8 den Transistor 2 derart an, dass die Stromzufuhr in regelmässigen Zeitabständen für einige Millisekunden unterbrochen wird. Die bewirkte Stromänderung im Spulenkreislauf bewirkt eine Magnetfeldänderung und eine Stromänderung in der Ankerspule. Letztere wird zur Versorgung der ankerseitigen Bedien- und Anzeigeelektronik 20 genutzt.

Während dem Spannungsunterbruch (Fig. 5 Bereich B) fällt der Strom in der Magnetspule ab. Bei geschlossenem Magnetkreis und einem kleinen Luftspalt ist der Magnet im gesättigtem Bereich, der Strom fällt anfänglich rasch, dann langsam ab. Bei gesättigtem Betrieb und einem Magnetkreis mit einem mittleren Luftspalt fällt der Strom langsam ab. Bei ungesättigtem Betrieb ist die anfängliche Stromstärke zu niedrig und/ oder der Stromabfall bedeutend flacher als bei gesättigtem Betrieb. Bei einem grossen Luftspalt ist der Magnet im ungesättigtem Bereich, der Strom fällt sehr rasch ab. Bei ungesättigtem Betrieb und offenem Magnetkreis ist der Stromabfall zu steil. Der Mikroprozessor erkennt, ob die für den Betrieb vorgesehene Stromstärke anfänglich vorhanden ist, und ob der für den geschlossenen und gesättigten Betrieb typische Stromabfall gemessen wird. Sollte dies nicht der Fall sein, so löst der Mikroprozessor eine Störungsfall aus mit Alarm und sofortiger Abstellung des gefährlichen Prozesses.

Eine Zuhalteeinrichtung 11,13,15 der beanspruchten Art dient, so kann zusammengefasst gesagt werden, dem Zuhalten und Freilassen, sowie Überwachen eines Zustandes eines einen Zugang zu einem Gefahrenraum versperrenden oder freigebenden Teils. Die Zuhalteeinrichtung umfasst einen Elektromagneten 11 und ein Anker 13 zum Schliessen des Magnetkreises des Elektromagneten. Weiter umfasst die Zuhalteeinrichtung einen Versorgungskreislauf, in welchem ein Transistor 2 zum Verbinden einer Spannungsquelle mit der Magnetspule (1) und Trennen der Spannungsquelle von der Magnetspule 1 und ein Messwiderstand 4 vorhanden sind. Weiter umfasst sie eine Auswertevorrichtung 7,8 zum Messen des Spannungsabfalls über den Messwiderstand 4 sowie zum Auswerten dieser Strommessung. Dank dem der Messwiderstand 4 auch im Magnetspulenkreislauf angeordnet ist, kann auch ein Spulenstrom gemessen werden, der lediglich innerhalb des Spulenkreislaufs auftritt. Es kann daher anhand dieses Stromes überwacht werden, ob während dem Betrieb der Anker 13 vom Kern 3 abgehoben wird, was einen Stromanstieg im Spulenkreislauf induziert. Es kann daher auch überwacht werden, wie der Stromabfall verläuft, wenn die Spule 1 von der Spannungsquelle getrennt wird. Durch Überwachen des Stromverlaufs beim Verbinden der Spule 1 mit der Spannungsquelle und das Überwachen des Spulenkreislaufs auf einen induzierten Stromanstieg und/oder einen Stromabfall ausserhalb eines Toleranzbereichs beim Trennen der Spannungsquelle von der Spule 1 ist eine sichere Erkennung des Zustands der Zuhalteeinrichtung gewährleistet.

## Patentansprüche

1. Zuhalteeinrichtung zum Zuhalten und Freilassen, sowie Überwachen eines Zustandes eines einen Zugang zu einem Gefahrenraum versperrenden oder freigebenden Teils (12), umfassend
- einen Elektromagneten (11) mit einer Magnetspule (1) und
- ein Anker (13) zum Schliessen des Magnetkreises des Elektromagneten (11), wobei Anker (13) und Elektromagnet (11) am Zugang und an dem den Zugang versperrenden oder freigebenden Teil (12) anzuordnen sind, so dass in einer den Zugang verschliessenden Position dieses Teils (12) der Magnetkreis geschlossen, in einer den Zugang freigebender Position der Magnetkreis jedoch offen ist,
- einen Versorgungskreislauf, in welchem ein Schalter (9) zum Verbinden einer Stromquelle mit der Magnetspule (1) und Trennen der Stromquelle von der Magnetspule (1) und ein Messwiderstand (4) vorhanden sind, und
- eine Auswertevorrichtung (8) zum Messen des Spannungsabfalls über den Messwiderstand (4) sowie zum Auswerten dieser Strommessung,
**dadurch gekennzeichnet,**
- **dass** der Messwiderstand (4) sowohl im Versorgungskreislauf als auch im Magnetspulenkreislauf angeordnet ist, wobei seine Anordnung im Magnetspulenkreislauf eine Überwachung des Strom Verhaltens beim Abschalten der Stromversorgung und während dem die Stromversorgung ausgeschaltet ist erlaubt.

2. Zuhalteeinrichtung nach Anspruch 1, **dadurch gekennzeichnet, dass** die Auswertevorrichtung (8) in Verbindung steht mit einer Zugangsschaltung zu einer übergeordneten Steuerung (17) für den Gefahrenraum und ausgebildet ist zum Senden von Informationen an die Zugangsschaltung und empfangen von Informationen von der Zugangsschaltung.

3. Zuhalteeinrichtung nach Anspruch 1, **dadurch gekennzeichnet, dass** die Auswertevorrichtung (8) ausgebildet ist zum Ansteuern des Schalters (9) in Abhängigkeit von einer Zeitmessung, einem Wert oder einer Wertdifferenz der Strommessung.

4. Zuhalteeinrichtung nach Anspruch 1, **dadurch gekennzeichnet, dass** die Auswertevorrichtung (8) ausgebildet ist zum Messen des zeitlichen Verlaufs des Stromanstiegs im Magnetspulenkreislauf beim Einschalten des Elektromagneten (11), insbesondere innerhalb des ungesättigten Betriebsbereichs des Elektromagneten (11).

5. Zuhalteeinrichtung nach Anspruch 1, **dadurch gekennzeichnet, dass** die Auswertevorrichtung (8) ausgebildet ist zum Messen einer Stromveränderung während des Betriebs des Elektromagneten (11), insbesondere eines über das normale Niveau des Betriebsstroms hinausgehenden Stromanstiegs im Magnetspulenkreislauf.

6. Zuhalteeinrichtung nach Anspruch 1, **dadurch gekennzeichnet, dass** die Auswertevorrichtung (8) ausgelegt ist zum Messen des zeitlichen Verlaufs des Stromabfalls im Magnetspulenkreislauf beim Unterbrechen des Versorgungskreislaufs und zum Einschalten der Stromversorgung mit dem Schalter (9) nach einem Erreichen eines ungesättigten Betriebsbereichs des Elektromagneten (11).

7. Zuhalteeinrichtung nach Anspruch 1, **dadurch gekennzeichnet, dass** der Kern (3) des Elektromagneten (11) aus Trafoblech geschichtet ist.

8. Zuhalteeinrichtung nach Anspruch 1, **gekennzeichnet durch** eine Spule (26) um den Anker (13) und eine mit dieser Ankerspule (26) verbundene Bedienelektronik (20) zur Eingabe von Signalen in den Magnetkreis und damit den Magnetspulenkreislauf.

9. Zuhalteeinrichtung nach Anspruch 1, **gekennzeichnet durch** eine Spule (26) um den Anker (13) und eine mit dieser Ankerspule (26) verbundene Anzeigeelektronik (20) zur Anzeige von Zustandsveränderungen oder des Zustands des Magnetkreises.

10. Zuhalteeinrichtung nach Anspruch 1, **gekennzeichnet durch** eine von einer Ebene abweichende Passform zwischen Anker (13) und Kern (3).

11. Verfahren zur Überwachung des Zustands eines einen Zugang zu einem Gefahrenraum versperrenden oder freigebenden Teils (12) mit einer Zuhalteeinrichtung gemäss einem der Ansprüche 1 bis 9, bei welchem eine Veränderung des Spannungsabfalls über den Messwiderstand (4) bei einer Veränderung eines Versorgungsparameters gemessen und interpretiert wird, **dadurch gekennzeichnet, dass** der zeitliche Verlauf der lediglich innerhalb des Magnetspulenkreislaufs überwachbaren Stromstärke überwacht wird.

12. Verfahren nach Anspruch 11, **dadurch gekennzeichnet, dass** beim Verbinden der Magnetspule (1) mit dem Versorgungskreislauf der zeitliche Verlauf des Stromanstiegs im Magnetspulenkreislauf innerhalb des ungesättigten Betriebs überwacht wird und aus diesem Verlauf geschlossen wird, ob der Magnetkreis geschlossen ist oder nicht.

13. Verfahren nach Anspruch 11 oder 12, **dadurch gekennzeichnet, dass** aufgrund der gemessenen Neigungen des Stromanstiegs ein Grenzwert des Magnetspulenstroms bezüglich gesättigtem und ungesättigtem Betriebsbereich des Magneten bestimmt wird.

14. Verfahren nach einem der vorangehenden Verfahrensansprüche, **dadurch gekennzeichnet, dass** der Magnetspulenkreislauf in zeitlichen Abständen von der Stromversorgung getrennt wird und dabei der Stromabfall im Spulenkreislauf überwacht wird.

15. Verfahren nach Anspruch 14, **dadurch gekennzeichnet, dass** die Stromversorgung nach einer vorbestimmten Zeitspanne oder sobald der Magnetspulenstrom unter einen vorbestimmten Wert fällt wieder zugeschaltet wird.

16. Verfahren nach einem der vorangehenden Verfahrensansprüche, **dadurch gekennzeichnet, dass** während des Betriebs des Elektromagneten (11) der Strom im Magnetspulenkreislauf überwacht wird auf einen über das normale Betriebsniveau hinausgehenden Anstieg.

## Claims

1. Device for keeping closed and for releasing as well as for supervising a condition of a part (12) that blocks or releases an access to a danger zone comprising:
- an electromagnet (11) with a magnetic coil (1) and
- an armature (13) for closing the magnetic circuit of the electromagnet (11), whereby the armature (13) and the electromagnet (11) are to be placed at the access and on the part (12) that blocks or releases the access so that the magnetic circuit is closed in a position of this part (12) that closes the access, the magnetic circuit is however open in a position that releases the access,
- a supply circuit in which a switch (9) for connecting a source of current to the magnetic coil (1) and for disconnecting the source of current from the magnetic coil (1) and a measuring resistor (4) exist and
- an evaluation device (8) for measuring the voltage drop via the measuring resistor (4) as well as for evaluating this current measurement,
**characterized in that** the measuring resistor (4) is placed in the supply circuit as well as in the magnetic coil circuit, whereby its arrangement in the magnetic coil circuit allows a supervision of the current behaviour when cutting off the current supply and during which the current supply is cut off.

2. Device for keeping closed according to claim 1, **characterized in that** the evaluation device (8) is in relation with an access circuit to a higher-level control (17) for the danger zone and is configured to send information to the access circuit and to receive information from the access circuit.

3. Device for keeping closed according to claim 1, **characterized in that** the evaluation device (8) is configured for triggering the switch (9) depending on a time measurement, on a value or a difference in value of the current measurement.

4. Device for keeping closed according to claim 1, **characterized in that** the evaluation device (8) is configured for measuring the time course of the current rise in the magnetic coil circuit when switching on the electromagnet (11), in particular within the unsaturated operating range of the electromagnet (11).

5. Device for keeping closed according to claim 1, **characterized in that** the evaluation device (8) is configured for measuring a current variation during the operation of the electromagnet (11), in particular of a current rise in the magnetic coil circuit that exceeds the normal level of the operating current.

6. Device for keeping closed according to claim 1, **characterized in that** the evaluation device (8) is dimensioned for measuring the time course of the voltage drop in the magnetic coil circuit when interrupting the supply circuit and for switching on the current supply with the switch (9) after having reached an unsaturated operating range of the electromagnet (11).

7. Device for keeping closed according to claim 1, **characterized in that** the core (3) of the electromagnet (11) is made of stratified transformer sheet.

8. Device for keeping closed according to claim 1, **characterized by** a coil (26) around the armature (13) and an operating electronics (20) connected with this armature coil (26) for entering signals into the magnetic circuit and thus into the magnetic coil circuit.

9. Device for keeping closed according to claim 1, **characterized by** a coil (26) around the armature (13) and a display electronics (20) connected with this armature coil (26) for displaying changes in condition or the condition of the magnetic circuit.

10. Device for keeping closed according to claim 1, **characterized by** a fitting between the armature (13) and the core (3) that differs from a planar surface.

11. Method for supervising the condition of a part (12) that blocks or releases an access to a danger zone with a device for keeping closed according to one of the claims 1 to 9 for which a variation of the voltage drop is measured by the measuring resistor (4) for a variation of a supply parameter and is interpreted, **characterized in that** the time course of the current strength that can only be supervised within the magnetic coil circuit is supervised.

12. Method according to claim 11, **characterized in that**, when connecting the magnetic coil (1) to the supply circuit, the time course of the current rise in the magnetic coil circuit within the unsaturated operation is supervised and it is derived from this course if the magnetic circuit is closed or not.

13. Method according to claim 11 or 12, **characterized in that** a threshold of the magnetic coil current with respect to the saturated and unsaturated operation range of the magnet is determined on the base of the measured tendencies of the current rise.

14. Method according to one of the preceding method claims, **characterized in that** the magnetic coil circuit is disconnected in time intervals from the current supply while the voltage drop in the coil circuit is supervised.

15. Method according to claim 14, **characterized in that** the current supply is switched on again after a predetermined period of time or as soon as the magnetic coil current falls under a predetermined value.

16. Method according to one of the preceding method claims, **characterized in that** the current in the magnetic coil circuit is supervised during the operation of the electromagnet (11) to supervise a rise exceeding the normal operating level.

## Revendications

1. Dispositif pour tenir fermé et relâcher ainsi que pour surveiller un état d'une pièce (12) qui bloque ou qui dégage un accès à un espace dangereux qui comprend :
- un électroaimant (11) avec une bobine magnétique (1) et
- un induit (13) pour fermer le circuit magnétique de l'électroaimant (11), cependant que l'induit (13) et l'électroaimant (11) doivent être placés à l'accès et sur la pièce (12) qui bloque ou dégage l'accès si bien que, dans une position de cette pièce (12) qui ferme l'accès, le circuit magnétique est fermé, dans une position qui dégage l'accès le circuit magnétique est cependant ouvert,
- un circuit d'alimentation dans lequel il existe un commutateur (9) pour relier une source de courant à la bobine magnétique (1) et pour séparer la source de courant de la bobine magnétique (1) et une résistance de mesure (4) et
- un dispositif d'évaluation (8) pour mesurer la chute de tension par la résistance de mesure (4) ainsi que pour évaluer cette mesure de courant,
**caractérisé en ce que** la résistance de mesure (4) est placée aussi bien dans le circuit d'alimentation que dans le circuit de la bobine magnétique, cependant que son placement dans le circuit de la bobine magnétique permet une surveülance du comportement du courant lors de l'arrêt de l'alimentation en courant et pendant lequel l'alimentation en courant est arrêtée.

2. Dispositif pour tenir fermé selon la revendication 1, **caractérisé en ce que** le dispositif d'évaluation (8) est en relation avec un circuit d'accès à une commande à un niveau supérieur (17) pour l'espace dangereux et est configuré pour envoyer des informations au circuit d'accès et pour recevoir des information du circuit d'accès.

3. Dispositif pour tenir fermé selon la revendication 1, **caractérisé en ce que** le dispositif d'évaluation (8) est configuré pour commander le commutateur (9) en fonction d'une mesure de temps, d'une valeur ou d'une différence de valeur de la mesure de courant.

4. Dispositif pour tenir fermé selon la revendication 1, **caractérisé en ce que** le dispositif d'évaluation (8) est configuré pour mesurer le déroulement dans le temps de la montée du courant dans le circuit de la bobine magnétique lors de la mise en circuit de l'électroaimant (11), en particulier à l'intérieur de la plage de fonctionnement non saturée de l'électroaimant (11).

5. Dispositif pour tenir fermé selon la revendication 1, **caractérisé en ce que** le dispositif d'évaluation (8) est configuré pour mesurer un changement de courant pendant le fonctionnement de l'électroaimant (11), en particulier d'une montée du courant dans le circuit de la bobine magnétique qui dépasse le niveau normal du courant de fonctionnement.

6. Dispositif pour tenir fermé selon la revendication 1, **caractérisé en ce que** le dispositif d'évaluation (8) est dimensionné pour mesurer le déroulement dans le temps de la chute de courant dans le circuit de la bobine magnétique lors de l'interruption du circuit d'alimentation et pour mettre en circuit l'alimentation en courant avec le commutateur (9) après avoir atteint une plage de fonctionnement non saturée de l'électroaimant (11).

7. Dispositif pour tenir fermé selon la revendication 1, **caractérisé en ce que** le noyau (3) de l'électroaimant (11) est formé de couches de tôle pour transformateur.

8. Dispositif pour tenir fermé selon la revendication 1, **caractérisé par** une bobine (26) autour de l'induit (13) et par une électronique de commande (20) reliée à la bobine d'induit (26) pour entrer des signaux dans le circuit magnétique et donc dans le circuit de la bobine magnétique.

9. Dispositif pour tenir fermé selon la revendication 1, **caractérisé par** une bobine (26) autour de l'induit (13) et par une électronique d'affichage (20), reliée à cette bobine d'induit (26), pour afficher des modifications d'état ou de l'état du circuit magnétique.

10. Dispositif pour tenir fermé selon la revendication 1, **caractérisé par** une forme ajustée entre l'induit (13) et le noyau (3) qui diffère d'une surface plane.

11. Procédé pour surveiller l'état d'une pièce (12) qui bloque ou qui dégage un accès à un espace dangereux avec un dispositif pour tenir fermé selon l'une des revendications 1 à 9 pour lequel une variation de la chute de tension est mesurée par la résistance de mesure (4) lors d'une variation d'un paramètre d'alimentation et est interprétée, **caractérisé en ce que** le déroulement dans le temps de l'intensité de courant qui ne peut être surveillée qu'à l'intérieur du circuit de la bobine magnétique est surveillé.

12. Procédé selon la revendication 11, **caractérisé en ce que**, lors du raccordement de la bobine magnétique (1) au circuit d'alimentation, le déroulement dans le temps de la montée du courant dans le circuit de la bobine magnétique est surveillé à l'intérieur du fonctionnement non saturé et que l'on conclut de ce déroulement que le circuit magnétique est fermé ou pas.

13. Procédé selon la revendication 11 ou 12, **caractérisé en ce qu'**en raison des tendances mesurées de la montée du courant un seuil du courant de la bobine magnétique est déterminé pour ce qui est de la plage de fonctionnement saturé et non saturée de l'aimant.

14. Procédé selon l'une des revendications de procédé précédentes, **caractérisé en ce que** le circuit de la bobine magnétique est déconnecté de l'alimentation en courant à des intervalles de temps et que la chute de courant dans le circuit de la bobine est alors surveillée.

15. Procédé selon la revendication 14, **caractérisé en ce que** l'alimentation en courant est à nouveau coupée après une période de temps prédéterminée ou dès que le courant de la bobine magnétique tombe en dessous d'une valeur prédéterminée.

16. Procédé selon l'une des revendications de procédé précédentes, **caractérisé en ce que** le courant dans le circuit de la bobine magnétique est surveillé pendant le fonctionnement de l'électroaimant (11) pour contrôler une montée qui dépasse le niveau de fonctionnement normal.
